# EUROPEAN PATENT SPECIFICATION

(11) **EP 3 320 779 B1**
(45) Date of publication and mention of the grant of the patent: **14.09.2022**
(21) Application number: 17201633.9
(22) Date of filing: 14.11.2017
(51) Int. Cl.: A21C 13/00, A21D 2/40, A21D 6/00, A21D 8/02

(54) **PROCESS FOR THE LEAVENING OF A DOUGH WITH MOTHER YEAST**
VERFAHREN ZUM GÄREN VON HEFETEIGEN
PROCÉDÉ DE FERMENTATION DE PÂTES À LEVURE

(30) Priority: 15.11.2016 IT 201600115186
(43) Date of publication of application: 16.05.2018
(73) Proprietor: Ali Group S.r.l., 20063 Cernusco sul Naviglio (MI) (IT)
(72) Inventor: LAZZARIN, Andrea, 35030 Padova (IT)
(74) Representative: Anselmi, Davide

(56) References cited:
- EP-A1- 0 117 521
- WO-A1-03/015524
- WO-A1-2015/071854
- DE-A1- 3 406 517
- FR-A1- 2 996 985
- US-A1- 2006 233 929

## Description

The present invention relates to a process for the leavening of a dough with mother yeast and, also, to a leavening cell for doughs with mother yeast configured to applied said leavening process.

The invention relates to a process for the leavening of dough with mother yeast for the food sector, in particular for the sector of bread-, pastry- and pizza- making and for the catering industry in general.

The process therefore relates to baked products, typically based on water and flour, made with mother yeast.

Mother yeast is rarely used nowadays in commercial or industrial breadmaking since its leavening process is very long and difficult to manage.

To date, there are leavening cells for baked products based on brewer's yeast, the so-called "retarding cabinets", which stop the leavening before accelerating it a few hours before the product needs to be baked/cooked. In fact, once the dough is leavened the operator has a maximum time of about two hours available before baking it, otherwise the leavening declines and the dough loses the organoleptic properties that allow it to be cooked correctly (in fact, it is commonly said that the product "dies").

In retarding cabinets known to date, the brewer's yeast-based dough is initially brought to a negative temperature (generally to -10°C) and then maintained at a low positive temperature (generally around 2°C) for various hours, so as to inhibit the leavening.

Some examples of retarding cabinets are shown in documents US2006/233929, WO03/015524, FR2996985, DE3406517 and EP0117521.

Document US2006/233929 discloses a leavening cell for dough comprising a generic yeast and configured to perform a first retarding mode, a proofing mode, a chilling mode and a second retarding mode before backing wherein the temperature is reduced to values below 0 °C during the chilling mode.

Document WO03/015524 shows a leavening cell and method for the leavening of a dough comprising water, flour and a generic yeast. In particular, the method involves freezing the doughs at temperatures below 0 °C in order to be able to thaw them when necessary, in order to start the leavening process.

Document FR2996985 describes a process for leavening a dough comprising a generic yeast wherein the dough is initially brought to very low temperature (equal or lower than 0 °C) in order to retard the leavening process.

Documents DE3406517 and EP0117521 show a leavening apparatus configured to perform the freezing of the dough to prevent the start of the leavening, so the operator gains a time interval longer to prepare all the dough's pieces for the cooking phase.

It is to be noted that both in the first step of reducing the temperature and in the second step of maintaining the dough, it is not possible to manage the moisture parameters of the dough because of the low operating temperatures, therefore any drop of water that forms in the dough or outside the dough freezes or the dough may become dehydrated. Therefore, after the maintenance step, the dough is gradually heated for some hours until it reaches a temperature of about 27°C during which the leavening is activated. Upon reaching such temperature the dough is leavened and the temperature is maintained constant so that the operator has about two hours of time during which to bake the leavened dough to obtain the desired baked products.

However, the restricted baking times described above can often be insufficient for the operator who needs to handle a large number of doughs, and very limiting, since they force the operator to perform the baking precisely during that restricted period of time.

In this context, the technical task underpinning the present invention is to provide a process for the leavening of a dough with mother yeast that obviates one or more drawbacks of the prior art as cited above.

In particular, it is an object of the present invention to provide a process for the leavening of a dough with mother yeast that allows the operational flexibility of the baking step of the leavened dough to be increased.

A further object of the present invention is to propose a process for the leavening of a dough with mother yeast that allows the temperature and the moisture of the dough to be controlled throughout the whole period in which the dough is present inside the cell 1 (not only during the dough leavening steps) so as to be able to improve the quality of the baked product and select its organoleptic properties.

The set technical task and specified aims are substantially attained by a process for the leavening of a dough with mother yeast comprising the technical characteristics set out in one or more of the appended claims.

In particular, the present invention envisages a process for the leavening of a dough with mother yeast comprising the steps of:
- preparing a dough comprising water, flour and mother yeast, wherein the dough has a predetermined initial temperature T0;
- preparing a leavening cell 1 for dough with mother yeast in which to insert the dough and in which the following phases are performed;
- inserting the dough into said leavening cell 1 which comprises a means for heating/cooling the dough and a control unit for automatically controlling the leavening, one or more sensors for detecting the temperature arranged inside said leavening cell 1 for detecting the temperature of the dough. In particular, one or more sensors are connected to the control unit for sending the detected parameters to the latter;
- activating the cooling means automatically through said control unit for cooling the dough until it reaches a first temperature T1 of the dough which is higher than a freezing temperature of the liquid of the dough and greater than 10°C;
- controlling said heating/cooling means automatically through said control unit for maintaining the first temperature T1 of the dough for a first period of time t1 to prevent leavening;
- activating and controlling said heating/cooling means automatically through said control unit for gradually heating the dough for a second period of time t2 until a second temperature T2 of the dough is reached, which is greater than the first temperature T1;
- subsequently activating and controlling said heating/cooling means automatically through said control unit for gradually cooling the dough for a third period of time t3 until a third temperature T3 of the dough is reached, less than the second temperature T2 and greater than 10°C so as to stabilise the leavening of the dough in order to prepare the dough for subsequent baking;
- controlling at least the duration of each period of time and the respective temperature by acting on the heating/cooling means so as to perform an automatic control based on the parameters pre-set by the user;
- controlling the moisture of the dough during every single step through detecting the moisture inside the leavening cell 1 and subsequently comparing the value of the moisture detected with a pre-set value of moisture;
- controlling temperature and moisture of the dough throughout the whole period in which the dough is present inside the leavening cell 1 so as to be able to improve the quality of the baked product and select its organoleptic properties;
- said steps of cooling the dough until a first temperature T1 is reached, maintaining said first temperature T1 of the dough for a first period of time t1, gradually heating the dough for a second period of time t2 until a second temperature T2 is reached and gradually cooling the dough for a third period of time t3 until a third temperature T3 is reached being performed in a single cycle from the provision of the dough to the preparation for baking.

Advantageously, thanks to the present invention, it is therefore possible to exploit the long leavening of the mother yeast to increase the baking period at the operator's discretion, since the gradual heating step followed by the gradual cooling step of the dough allows gentle leavening to be obtained which stabilises the dough itself, guaranteeing a longer period of time for the operator during which the leavened dough can be baked.

In this way the operator can conveniently manage a longer baking period and be free from the stringent times dictated by the use of traditional leavening cells and techniques.

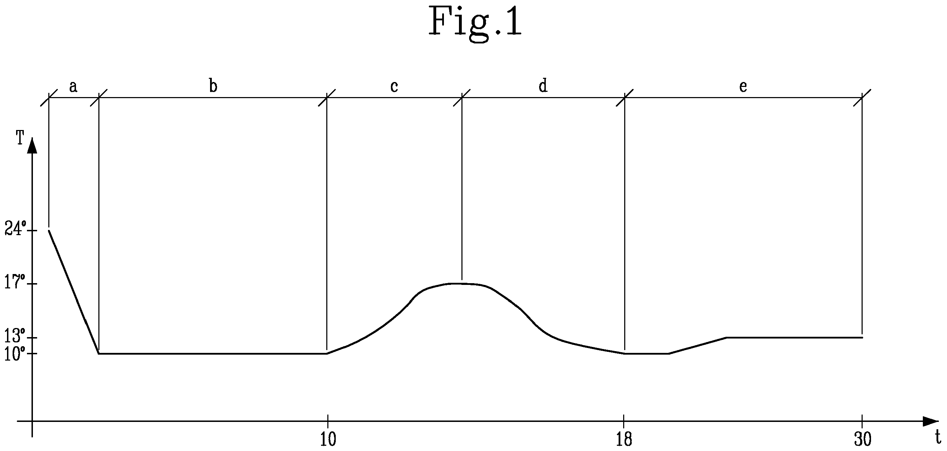

Further characteristics and advantages of the present invention will emerge more clearly from the indicative, and therefore not limiting, description of a preferred but not exclusive embodiment of a process for the leavening of a dough with mother yeast, as illustrated in the schematic graph of figure 1, which shows the trend over time "t" of the temperature "T" of the dough.

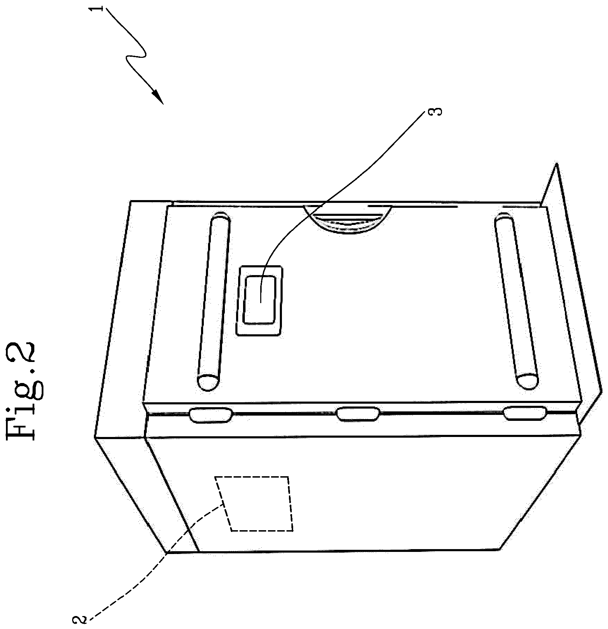

Figure 2 illustrates an embodiment of a leavening cell for doughs with mother yeast in accordance with the process of the present invention.

In particular, the temperature "T" is expressed in degrees Celsius centigrade while the time "t" is expressed in hours.

The process for leavening a dough with mother yeast according to the present invention first envisages the step of advantageously preparing a dough comprising water, flour and mother yeast.

The dough has an initial predetermined temperature T0, preferably equal to the temperature of the environment inside which the dough is prepared. For example, as can be seen in figure 1, the initial predetermined temperature T0 is equal to 24°C.

The process then comprises a step of cooling the dough until a first temperature T1 of the dough is reached, which is greater than a freezing point of water (greater than zero degrees centigrade). This step is identified by zone "a" of the graph in figure 1. The first temperature T1 of the dough is 10°C.

Therefore, advantageously, the temperature reduction that is to be performed in this step is such that the dough reaches a positive temperature that does not cause the drops of water contained in the dough to freeze.

Subsequently, the process comprises the step of maintaining the first temperature T1 of the dough for a first period of time t1 to prevent leavening. This step is identified by zone "b" of the graph in figure 1.

Preferably, the first period of time t1 is comprised between 5 hours and 34 hours, even more preferably being 10 hours.

Advantageously, this step allows the leavening to be stopped by stabilising the dough at the first temperature T1.

According to the present invention, the process then comprises a step of gradually heating the dough for a second period of time t2 until a second temperature T2 of the dough is reached and subsequently a step of gradually cooling the dough for a third period of time t3 until a third temperature T3 of the dough is reached so as to obtain the leavening of the dough.

In other words, as illustrated in figure 1, the time t - temperature T curve of the dough in this step is developed with a trend defining a bell, in which the ascending branch of the bell (zone "c" of the graph of figure 1) identifies the gradual heating step, whereas the descending branch (zone "d" of the graph of figure 1) identifies the cooling step of the dough. Thanks to the gradual heating and cooling steps, the leavening of the dough is gradually activated in a controlled way and at the end of such step the dough is leavened and ready to be baked.

Advantageously, by managing the leavening process gradually, it is possible to restart the leavening that had been stopped during the step of maintaining the first temperature T1 and having control of the acidity, the enzyme activity and the fermentation of the dough, hence being able to select the optimal characteristics of the dough based on production requirements.

Thanks to the gentle and progressive leavening obtained through the gradual heating and cooling, it is possible to maintain the leavened dough for longer.

Preferably, the second temperature T2 of the dough is comprised between 17°C and 24°C, even more preferably it is equal to 17 °C. Advantageously, in the range from 17°C to 24°C the characteristic fragrances and aromas of the dough develop, therefore thanks to the present invention it is possible to select them in a controlled way. Preferably, the first period of time t1 is comprised between 5 hours and 34 hours, preferably being 10 hours.

Furthermore, the sum of the second period of time t2 and the third period of time t3 is comprised between 2 hours and 12 hours, even more preferably being 8 hours.

Preferably, the process according to the present invention comprises a step of establishing *a priori* the durations of the first period of time t1, of the second period of time t2 and of the third period of time t3 and possibly of the fourth period of time t4, as a function of a total duration of the cycle pre-set by the user.

In particular, as a function of a total duration of the cycle pre-set by the user, the method envisages giving a greater priority of non-variability of the second period of time t2 and the third period of time t3 with respect to the first period of time t1.

In other words, the process envisages establishing said time durations a *priori* by varying the first period of time t1 as a function of the total duration of the cycle pre-set by the user and substantially maintaining unaltered the second period of time t2 and the third period of time t3 with respect to respective predefined values.

The third temperature T3 of the dough is comprised between 8°C and 12°C, preferably being equal to 10°C.

Preferably, as shown in the exemplifying graph of figure 1, the first temperature T1 of the dough and the third temperature T3 of the dough are the same.

Therefore, advantageously, the temperature of the dough at the start of the gradual heating step is the same as at the end of the gradual cooling step.

It is to be noted that the steps of cooling the dough until the first temperature T1 is reached, maintaining said first temperature T1 of the dough for the first period of time t1, gradually heating the dough for the second period of time t2 until the second temperature T2 is reached and gradually cooling the dough for the third period of time t3 until the third temperature T3 is reached, are performed in a single cycle from the provision of the dough to the preparation for baking. In other words, there is no alternation of cycles. Preferably, the gradual heating and/or gradual cooling steps are performed in subsequent steps with a time "t" - temperature "T" trend of the linear type and, even more preferably, with constant moisture for each step.

In other words, the increase or decrease in temperature takes place linearly.

Even more preferably, there are 25 subsequent steps and they regard the variation/control of the time, temperature and moisture. It is in any case to be noted that there may also be fewer than 25 subsequent steps or even more than 25 according to the work requirements.

It is to be noted that the method through the control unit is provided to control at least the duration of each period of time and the respective temperature by acting on the heating/cooling means so as to perform an automatic control based on the parameters pre-set by the user. It is to be noted that the method envisages a step of controlling the moisture of the dough during every single step. Such moisture control is to be performed through detecting the moisture inside the cell 1 and a subsequent comparison between the moisture detected and a pre-set value. Subsequently, the method envisages heating (to reduce the moisture) or generating moisture (through a moisture generator) to reach such pre-set value.

Preferably, but not necessarily, the process comprises a further leavening stabilisation and characterisation step (zone "e" of the graph in figure 1) during which it is possible to cook the dough, subsequent to the cooling step, during which the dough is maintained at a fourth temperature T4 for a fourth period of time t4. It is to be noted that the temperature T4 (which may be greater than or equal to T3) is used to suspend the leavening of the dough pending baking. During such period of time t4 the acidity (pH) of the dough is also stabilised.

Preferably, the fourth temperature T4 of the dough is comprised between 10°C and 15°C, even more preferably being equal to 13°C.

Preferably, the fourth period of time t4 is comprised between 0 hours (possibility to bake immediately) and 12 hours, even more preferably being 12 hours.

Advantageously, during the stabilisation step the operator is guaranteed high operating flexibility; in other words, the operator does not have a final time to set in which baking must take place but can have up to 12 hours of time for doing so.

In this way, the process allows the operator's workflow to be improved, also allowing the operator to bake various batches per day, meeting consumer requirements.

It is thus possible, for example, to have various leavened doughs ready for baking at any time, guaranteeing that the user can offer baked products that are always hot throughout the day. The user is no longer conditioned by the difficulty to respect "fixed times" for baking determined by the leavened doughs, which guarantees better quality of life and work for professional bakers. Advantageously, the operating costs are also reduced since a smaller oven can be used with the possibility to bake various batches per day.

With reference to figure 2, according to a further aspect of the present invention, a leavening cell 1 for doughs with mother yeast is provided, comprising a control and management unit 2 configured to control and manage the temperature and moisture parameters of a dough comprising water, flour and mother yeast, during the steps of the process for the leavening of a dough comprising mother yeast according to the present invention.

In particular, the control unit is configured to:
- activate said cooling means automatically through said control unit in order to cool the dough to an initial predetermined temperature T0 until a first temperature T1 of the dough is reached, greater than a freezing point of the liquid of the dough and greater than 10° C;
- control said heating/cooling means automatically through said control unit for maintaining said first temperature T1 of the dough for a first period of time t1 to prevent leavening;
- activate and control said heating/cooling means automatically through said control unit for gradually heating the dough for a second period of time t2 until a second temperature T2 of the dough is reached, greater than the first temperature T1;
- activate and control said heating/cooling means automatically through said control unit for gradually cooling the dough for a third period of time t3 until a third temperature T3 of the dough is reached, less than the second temperature T2 and greater than 10°C for obtaining the leavening of the dough and for preparing the dough for subsequent baking;
- said control unit being configured to perform in a single cycle from the provision of the dough to the preparation for baking the operations of cooling the dough until a first temperature T1 is reached, maintaining said first temperature T1 of the dough for a first period of time t1, gradually heating the dough for a second period of time t2 until a second temperature T2 is reached and gradually cooling the dough for a third period of time t3 until a third temperature T3 is reached;
- said control unit of the leavening cell 1 being configured to:
- compare a moisture value of the dough detected with a pre-set value of moisture;
- heating or generating moisture in function of said comparison for controlling the moisture of the dough
- controlling temperature and moisture of the dough throughout the whole period in which the dough is present inside the leavening cell 1 so as to be able to improve the quality of the baked product and select its organoleptic properties,
wherein one or more sensors for detecting the temperature are arranged inside said leavening cell 1 for detecting the temperature of the dough; said one or more sensors being connected to the control unit for sending the detected parameters to the latter.

Advantageously, the cell control and management unit allows the characteristic parameters of doughs to be managed and monitored, allowing various implementation possibilities of final baked products. Preferably, the cell 1 may comprise a user interface 3, for example a touch-screen display, with which the operator can interface for controlling and managing the control and management unit.

Furthermore, the cell 1 comprises a heating and/or cooling means for heating and/or cooling the internal chamber (into which the dough is inserted) and a means for generating moisture operatively connected to the control unit 2 for being activated/deactivated by the latter.

The present invention reaches the proposed aims, overcoming the drawbacks encountered in the prior art and providing the user with an innovative process that simplifies the operations for making baked products offering the operator a new and totally personalisable experience based on their needs.

## Claims

1. A process for the leavening of a dough with mother yeast comprising the steps of:
- preparing a dough comprising water, flour and mother yeast, said dough having a predetermined initial temperature (T0);
- preparing a leavening cell for dough with yeast mother in which to insert the dough and in which the following phases are performed;
- inserting said dough into said leavening cell which comprises a means for heating/cooling the dough and a control unit for automatically controlling the leavening, one or more sensors for detecting the temperature arranged inside said leavening cell (1) for detecting the temperature of the dough; said one or more sensors being connected to the control unit for sending the detected parameters to the latter;
- activating said cooling means automatically through said control unit for cooling the dough until it reaches a first temperature (T1) of the dough which is higher than a freezing temperature of the liquid of the dough and being 10°C;
- controlling said heating/cooling means automatically through said control unit for maintaining said first temperature (T1) of the dough for a first period of time (t1) to prevent leavening;
- activating and controlling said heating/cooling means automatically through said control unit for gradually heating the dough for a second period of time (t2) until a second temperature (T2) of the dough is reached, which is greater than the first temperature (T1);
- subsequently activating and controlling said heating/cooling means automatically through said control unit for gradually cooling the dough for a third period of time (t3) until a third temperature (T3) of the dough is reached, less than the second temperature (T2) and being 10°C so as to stabilise the leavening of the dough in order to prepare the dough for subsequent baking;
- controlling at least the duration of each period of time and the respective temperature by acting on the heating/cooling means so as to perform an automatic control based on the parameters pre-set by the user;
- controlling the moisture of the dough during every single step through detecting the moisture inside the leavening cell (1) and subsequently comparing the value of the moisture detected with a pre-set value of moisture;
- controlling temperature and moisture of the dough throughout the whole period in which the dough is present inside the leavening cell (1) so as to be able to improve the quality of the baked product and select its organoleptic properties;
- said steps of cooling the dough until a first temperature (T1) is reached, maintaining said first temperature (T1) of the dough for a first period of time (t1), gradually heating the dough for a second period of time (t2) until a second temperature (T2) is reached and gradually cooling the dough for a third period of time (t3) until a third temperature (T3) is reached being performed in a single cycle from the provision of the dough to the preparation for baking.

2. The process according to claim 1, wherein said first period of time (t1) is comprised between 5 hours and 34 hours, preferably being 10 hours.

3. The process according to one or more of the preceding claims, wherein said second temperature (T2) of the dough is comprised between 17°C and 24°C, preferably being 17°C.

4. The process according to one or more of the preceding claims, wherein the sum of the second period of time (t2) and the third period of time (t3) is comprised between 2 hours and 12 hours, preferably being 8 hours.

5. The process according to one or more of the preceding claims, wherein said first temperature (T1) of the dough and said third temperature (T3) of the dough coincide.

6. The process according to one or more of the preceding claims, wherein said gradual heating step and/or said gradual cooling step are performed in successive phases with a linear type progression.

7. The process according to one or more of the preceding claims, comprising a further stabilisation step of the leavening during which it is possible to cook the dough, subsequent to the cooling step, during which the dough is maintained at a fourth temperature (T4) for a fourth period of time (t4).

8. The process according to claim 7, wherein said fourth temperature (T4) of the dough is comprised between 10°C and 15°C, preferably being 13°C.

9. The process according to claim 7 or 8, wherein said fourth period of time (t4) is comprised between 30 minutes and 12 hours, preferably being 12 hours.

10. The process according to one or more of the preceding claims, comprising a step of establishing a priori the durations of the first period of time (t1), the second period of time (t2), the third period of time (t3) as a function of the total duration of the cycle pre-set by the user; said step of establishing said durations of time a priori being implemented by varying the first period of time (t1) as a function of the total duration of the cycle pre-set by the user and substantially maintaining unvaried the second period of time (t2) and the third period of time (t3).

11. A leavening cell for doughs with mother yeast, comprising a means for heating/cooling the dough and a control unit for automatically controlling said heating/cooling means; said control unit being configured to:
- activate said cooling means automatically through said control unit in order to cool the dough to an initial predetermined temperature (T0) until a first temperature (T1) of the dough is reached, greater than a freezing point of the liquid of the dough and being 10° C;
- control said heating/cooling means automatically through said control unit for maintaining said first temperature (T1) of the dough for a first period of time (t1) to prevent leavening;
- activate and control said heating/cooling means automatically through said control unit for gradually heating the dough for a second period of time (t2) until a second temperature (T2) of the dough is reached, greater than the first temperature (T1);
- activate and control said heating/cooling means automatically through said control unit for gradually cooling the dough for a third period of time (t3) until a third temperature (T3) of the dough is reached, less than the second temperature (T2) and being 10°C for obtaining the leavening of the dough and for preparing the dough for subsequent baking;
- said control unit being configured to perform in a single cycle from the provision of the dough to the preparation for baking the operations of cooling the dough until a first temperature (T1) is reached, maintaining said first temperature (T1) of the dough for a first period of time (t1), gradually heating the dough for a second period of time (t2) until a second temperature (T2) is reached and gradually cooling the dough for a third period of time (t3) until a third temperature (T3) is reached;
- said control unit of the leavening cell (1) being configured to:
- compare a moisture value of the dough detected with a pre-set value of moisture;
- heating or generating moisture in function of said comparison for controlling the moisture of the dough
- controlling temperature and moisture of the dough throughout the whole period in which the dough is present inside the leavening cell (1) so as to be able to improve the quality of the baked product and select its organoleptic properties,
wherein one or more sensors for detecting the temperature are arranged inside said leavening cell (1) for detecting the temperature of the dough; said one or more sensors being connected to the control unit for sending the detected parameters to the latter.

12. The leavening cell according to claim 11, **characterised in that** the control unit is configured to establish a priori the durations of the first period of time (t1), the second period of time (t2), the third period of time (t3) as a function of the total duration of the cycle pre-set by the user; said control unit being configured to vary the first period of time (t1) as a function of the total duration of the cycle pre-set by the user and substantially maintaining unvaried the second period of time (t2) and the third period of time (t3).

## Patentansprüche

1. Verfahren zum Gären von Hefeteig, umfassend die folgenden Schritte:
- Vorbereiten eines Teigs, der Wasser, Mehl und Mutterhefe umfasst, wobei der Teig eine vorgegebene Anfangstemperatur (T0) aufweist;
- Vorbereiten einer Gärungszelle für Hefeteig, in die der Teig einzufügen ist und in der die nachfolgenden Phasen durchgeführt werden;
- Einfügen des Teigs in die Gärungszelle, die Mittel zum Erwärmen/Kühlen des Teigs und eine Steuereinheit zur automatischen Regelung der Gärung, einen oder mehrere Sensoren zur Erfassung der Temperatur, die in der Gärungszelle (1) angeordnet sind, um die Temperatur des Teigs zu erfassen, umfasst, wobei der eine oder die mehreren Sensoren mit der Steuereinheit verbunden sind, um dieser die erfassten Parameter zu übermitteln;
- Aktivieren der Kühlungsmittel automatisch durch die Steuereinheit, um den Teig zu kühlen, bis er eine erste Temperatur (T1) des Teigs erreicht, die höher ist als eine Gefriertemperatur der Flüssigkeit des Teigs und 10 °C beträgt;
- Regeln der Erwärmungs-/Kühlungsmittel automatisch durch die Steuereinheit, um die erste Temperatur (T1) des Teigs für einen ersten Zeitraum (t1) aufrechtzuerhalten, um das Gären zu vermeiden;
- Aktivieren und Regeln der Erwärmungs-/Kühlungsmittel automatisch durch die Steuereinheit, um den Teig stufenweise für einen zweiten Zeitraum (t2) zu erwärmen, bis eine zweite Temperatur (T2) des Teigs erreicht ist, die größer ist als die erste Temperatur (T1);
- anschließend Aktivieren und Regeln der Erwärmungs-/Kühlungsmittel automatisch durch die Steuereinheit, um den Teig stufenweise für einen dritten Zeitraum (t3) zu kühlen, bis eine dritte Temperatur (T3) des Teigs erreicht ist, die kleiner ist als die zweite Temperatur (T2) und 10 °C beträgt, sodass die Gärung des Teigs stabilisiert wird, um den Teig für das darauffolgende Backen vorzubereiten;
- Regeln zumindest der Dauer eines jeden Zeitraums und der jeweiligen Temperatur durch Einwirken auf die Erwärmungs-/Kühlungsmittel, sodass eine automatische Regelung, basierend auf den vom Nutzer voreingestellten Parametern, durchgeführt wird;
- Regeln der Feuchtigkeit des Teigs während eines jeden einzelnen Schritts durch Erfassen der Feuchtigkeit in der Gärungszelle (1) und darauffolgendes Vergleichen des erfassten Feuchtigkeitswerts mit einem voreingestellten Feuchtigkeitswert;
- Regeln von Temperatur und Feuchtigkeit des Teigs während des gesamten Zeitraums, in dem sich der Teig in der Gärungszelle (1) befindet, sodass es möglich ist, die Qualität des gebackenen Produkts zu verbessern und dessen organoleptischen Eigenschaften auszuwählen,
- wobei die Schritte zum Kühlen des Teigs, bis eine erste Temperatur (T1) erreicht ist, zum Aufrechterhalten der ersten Temperatur (T1) des Teigs für einen ersten Zeitraum (t1), zum stufenweisen Erwärmen des Teigs für einen zweiten Zeitraum (t2), bis eine zweite Temperatur (T2) erreicht ist, und zum stufenweisen Kühlen des Teigs für einen dritten Zeitraum (t3), bis eine dritte Temperatur (T3) erreicht ist, in einem einzigen Zyklus von der Bereitstellung des Teigs bis zur Vorbereitung zum Backen durchgeführt werden.

2. Verfahren nach Anspruch 1, wobei der erste Zeitraum (t1) zwischen 5 Stunden und 34 Stunden eingeschlossen ist und vorzugsweise 10 Stunden beträgt.

3. Verfahren nach einem oder mehreren der vorhergehenden Ansprüche, wobei die zweite Temperatur (T2) des Teigs zwischen 17 °C und 24 °C eingeschlossen ist und vorzugsweise 17 °C beträgt.

4. Verfahren nach einem oder mehreren der vorhergehenden Ansprüche, wobei die Summe des zweiten Zeitraums (t2) und des dritten Zeitraums (t3) zwischen 2 Stunden und 12 Stunden eingeschlossen ist und vorzugsweise 8 Stunden beträgt.

5. Verfahren nach einem oder mehreren der vorhergehenden Ansprüche, wobei die erste Temperatur (T1) des Teigs und die dritte Temperatur (T3) des Teigs übereinstimmen.

6. Verfahren nach einem oder mehreren der vorhergehenden Ansprüche, wobei der Schritt zum stufenweisen Erwärmen und/oder der Schritt zum stufenweisen Kühlen in aufeinanderfolgenden Phasen mit einem Fortschritt vom linearen Typ durchgeführt werden.

7. Verfahren nach einem oder mehreren der vorhergehenden Ansprüche, umfassend einen weiteren Stabilisierungsschritt des Gärens, während dessen die Möglichkeit besteht, den Teig nach dem Schritt zum Kühlen zu garen, während dessen der Teig auf einer vierten Temperatur (T4) für einen vierten Zeitraum (t4) beibehalten wird.

8. Verfahren nach Anspruch 7, wobei die vierte Temperatur (T4) des Teigs zwischen 10 °C und 15 °C eingeschlossen ist und vorzugsweise 13 °C beträgt.

9. Verfahren nach Anspruch 7 oder 8, wobei der vierte Zeitraum (t4) zwischen 30 Minuten und 12 Stunden eingeschlossen ist und vorzugsweise 12 Stunden beträgt.

10. Verfahren nach einem oder mehreren der vorhergehenden Ansprüche, umfassend einen Schritt, um die Dauer des ersten Zeitraums (t1), des zweiten Zeitraums (t2), des dritten Zeitraums (t3) im Vorfeld als eine Funktion der Gesamtdauer des vom Nutzer voreingestellten Zyklus festzulegen, wobei der Schritt, um die Zeitdauern im Vorfeld festzulegen, implementiert wird, indem der erste Zeitraum (t1) als eine Funktion der Gesamtdauer des vom Nutzer voreingestellten Zyklus variiert wird und der zweite Zeitraum (t2) und der dritte Zeitraum (t3) im Wesentlichen unverändert aufrechterhalten werden.

11. Gärungszelle für Hefeteige, umfassend Mittel zum Erwärmen/Kühlen des Teigs und eine Steuereinheit zum automatischen Regeln dieser Erwärmungs-/Kühlungsmittel, wobei die Steuereinheit ausgelegt ist, um
- die Kühlungsmittel automatisch durch die Steuereinheit zu aktivieren, um den Teig auf eine vorgegebene Anfangstemperatur (T0) zu kühlen, bis eine erste Temperatur (T1) des Teigs erreicht ist, die größer ist als ein Gefrierpunkt der Flüssigkeit des Teigs und 10 °C beträgt;
- die Erwärmungs-/Kühlungsmittel automatisch durch die Steuereinheit zu regeln, um die erste Temperatur (T1) des Teigs für einen ersten Zeitraum (t1) aufrechtzuerhalten, um das Gären zu vermeiden;
- die Erwärmungs-/Kühlungsmittel automatisch durch die Steuereinheit zu aktivieren und zu regeln, um den Teig stufenweise für einen zweiten Zeitraum (t2) zu erwärmen, bis eine zweite Temperatur (T2) des Teigs erreicht ist, die größer ist als die erste Temperatur (T1);
- die Erwärmungs-/Kühlungsmittel automatisch durch die Steuereinheit zu aktivieren und zu regeln, um den Teig stufenweise für einen dritten Zeitraum (t3) zu kühlen, bis eine dritte Temperatur (T3) des Teigs erreicht ist, die kleiner ist als die zweite Temperatur (T2) und 10 °C beträgt, um das Gären des Teigs zu bewirken und den Teig für das darauffolgende Backen vorzubereiten,
- wobei die Steuereinheit ausgelegt ist, um in einem einzigen Zyklus von der Bereitstellung des Teigs bis zum Vorbereiten für das Backen die Vorgänge zum Kühlen des Teigs, bis eine erste Temperatur (T1) erreicht ist, zum Aufrechterhalten der ersten Temperatur (T1) des Teigs für einen ersten Zeitraum (t1), zum stufenweisen Erwärmen des Teigs für einen zweiten Zeitraum (t2), bis eine zweite Temperatur (T2) erreicht ist, und zum stufenweisen Kühlen des Teigs für einen dritten Zeitraum (t3), bis eine dritte Temperatur (T3) erreicht ist, durchzuführen,
- wobei die Steuereinheit der Gärungszelle (1) ausgelegt ist, um
- einen erfassten Feuchtigkeitswert des Teigs mit einem voreingestellten Feuchtigkeitswert zu vergleichen;
- in Funktion des Vergleichs zur Regelung der Feuchtigkeit des Teigs Wärme oder Feuchtigkeit zu erzeugen;
- die Temperatur und Feuchtigkeit des Teigs während des gesamten Zeitraums, in dem sich der Teig in der Gärungszelle (1) befindet, zu regeln, sodass es möglich ist, die Qualität des gebackenen Produkts zu verbessern und dessen organoleptischen Eigenschaften auszuwählen, wobei ein oder mehrere Sensoren zur Erfassung der Temperatur in der Gärungszelle (1) angeordnet sind, um die Temperatur des Teigs zu erfassen, wobei der eine oder die mehreren Sensoren mit der Steuereinheit verbunden sind, um dieser die erfassten Parameter zu übermitteln.

12. Gärungszelle nach Anspruch 11, **dadurch gekennzeichnet, dass** die Steuereinheit ausgelegt ist, um die Dauer des ersten Zeitraums (t1), des zweiten Zeitraums (t2), des dritten Zeitraums (t3) im Vorfeld als eine Funktion der Gesamtdauer des vom Nutzer voreingestellten Zyklus festzulegen, wobei die Steuereinheit ausgelegt ist, um den ersten Zeitraum (t1) als eine Funktion der Gesamtdauer des vom Nutzer voreingestellten Zyklus zu variieren und den zweiten Zeitraum (t2) und den dritten Zeitraum (t3) im Wesentlichen unverändert aufrechtzuerhalten.

## Revendications

1. Procédé de levage d'une pâte au levain, comprenant les étapes de :
- préparer une pâte comprenant de l'eau, de la farine et du levain, ladite pâte ayant une température initiale prédéterminée (T0) ;
- préparer une cellule de levage pour pâte au levain dans laquelle introduire la pâte et dans laquelle les phases suivantes sont effectuées ;
- introduire ladite pâte dans ladite cellule de levage qui comprend des moyens pour chauffer/refroidir la pâte et une unité de contrôle pour contrôler automatiquement le levage, un ou plusieurs capteurs, pour détecter la température, disposés à l'intérieur de ladite cellule de levage (1) pour détecter la température de la pâte ; lesdits un ou plusieurs capteurs étant reliés à l'unité de contrôle pour envoyer les paramètres détectés à cette dernière ;
- activer automatiquement lesdits moyens de refroidissement par l'intermédiaire de ladite unité de contrôle pour refroidir la pâte jusqu'à ce qu'elle atteigne une première température (T1) de la pâte qui est supérieure à une température de congélation du liquide de la pâte et étant de 10 °C ;
- contrôler automatiquement lesdits moyens de chauffage/refroidissement par l'intermédiaire de ladite unité de contrôle pour maintenir ladite première température (T1) de la pâte pendant une première période de temps (t1) afin d'empêcher le levage ;
- activer et contrôler automatiquement lesdits moyens de chauffage/refroidissement par l'intermédiaire de ladite unité de contrôle pour chauffer progressivement la pâte pendant une seconde période de temps (t2) jusqu'à ce qu'une seconde température (T2) de la pâte soit atteinte, qui est supérieure à la première température (T1) ;
- activer et contrôler ensuite automatiquement lesdits moyens de chauffage/refroidissement par l'intermédiaire de ladite unité de contrôle pour refroidir progressivement la pâte pendant une troisième période de temps (t3) jusqu'à ce qu'une troisième température (T3) de la pâte soit atteinte, inférieure à la deuxième température (T2) et correspondant à 10 °C de façon à stabiliser le levage de la pâte afin de préparer la pâte à une cuisson ultérieure ;
- contrôler au moins la durée de chaque période de temps et la température respective en agissant sur les moyens de chauffage/refroidissement de manière à effectuer un contrôle automatique basé sur les paramètres prédéfinis par l'utilisateur ;
- contrôler l'humidité de la pâte pendant chaque étape en détectant l'humidité à l'intérieur de la cellule de levage (1) et en comparant ensuite la valeur de l'humidité détectée à une valeur d'humidité préétablie ;
- contrôler la température et l'humidité de la pâte pendant toute la période pendant laquelle la pâte est présente à l'intérieur de la cellule de levage (1) de façon à pouvoir améliorer la qualité du produit cuit et sélectionner ses propriétés organoleptiques ;
- lesdites étapes de refroidissement de la pâte jusqu'à ce qu'une première température (T1) soit atteinte, en maintenant ladite première température (T1) de la pâte pendant une première période de temps (t1), en chauffant progressivement la pâte pendant une deuxième période de temps (t2) jusqu'à ce qu'une deuxième température (T2) soit atteinte et en refroidissant progressivement la pâte pendant une troisième période de temps (t3) jusqu'à ce qu'une troisième température (T3) soit atteinte, étant réalisées en un seul cycle depuis la fourniture de la pâte jusqu'à la préparation pour la cuisson.

2. Procédé selon la revendication 1, dans lequel ladite première période de temps (t1) est comprise entre 5 et 34 heures, celle-ci étant de préférence de 10 heures.

3. Procédé selon une ou plusieurs des revendications précédentes, dans lequel ladite seconde température (T2) de la pâte est comprise entre 17 et 24 °C, celle-ci étant de préférence de 17 °C.

4. Procédé selon une ou plusieurs des revendications précédentes, dans lequel la somme de la deuxième période de temps (t2) et de la troisième période de temps (t3) est comprise entre 2 et 12 heures, celle-ci étant de préférence de 8 heures.

5. Procédé selon une ou plusieurs des revendications précédentes, dans lequel ladite première température (T1) de la pâte et ladite troisième température (T3) de la pâte coïncident.

6. Procédé selon une ou plusieurs des revendications précédentes, dans lequel ladite étape de chauffage progressif et/ou ladite étape de refroidissement progressif sont réalisées en phases successives avec une progression de type linéaire.

7. Procédé selon une ou plusieurs des revendications précédentes, comprenant une étape supplémentaire de stabilisation du levage au cours de laquelle il est possible de cuire la pâte, postérieurement à l'étape de refroidissement, pendant laquelle la pâte est maintenue à une quatrième température (T4) pendant une quatrième période de temps (t4).

8. Procédé selon la revendication 7, dans lequel ladite quatrième température (T4) de la pâte est comprise entre 10 et 15 °C, celle-ci étant de préférence de 13 °C.

9. Procédé selon la revendication 7 ou 8, dans lequel ladite quatrième période de temps (t4) est comprise entre 30 minutes et 12 heures, celle-ci étant de préférence de 12 heures.

10. Procédé selon une ou plusieurs des revendications précédentes, comprenant une étape consistant à établir a priori les durées de la première période de temps (t1), de la deuxième période de temps (t2), de la troisième période de temps (t3) en fonction de la durée totale du cycle prédéfini par l'utilisateur ; ladite étape d'établissement desdites durées de temps a priori étant mise en œuvre en faisant varier la première période de temps (t1) en fonction de la durée totale du cycle prédéfini par l'utilisateur et en maintenant essentiellement inchangées la deuxième période de temps (t2) et la troisième période de temps (t3).

11. Cellule de levage pour pâtes au levain, comprenant des moyens pour chauffer/refroidir la pâte et une unité de contrôle pour contrôler automatiquement lesdits moyens de chauffage/refroidissement ; ladite unité de contrôle étant configurée pour :
- activer automatiquement lesdits moyens de refroidissement par l'intermédiaire de ladite unité de contrôle afin de refroidir la pâte à une température initiale prédéterminée (T0) jusqu'à ce qu'une première température (T1) de la pâte soit atteinte, supérieure à un point de congélation du liquide de la pâte et étant de 10 °C ;
- contrôler automatiquement lesdits moyens de chauffage/refroidissement par l'intermédiaire de ladite unité de contrôle pour maintenir ladite première température (T1) de la pâte pendant une première période de temps (t1) afin d'empêcher le levage ;
- activer et contrôler automatiquement lesdits moyens de chauffage/refroidissement par l'intermédiaire de ladite unité de contrôle pour chauffer progressivement la pâte pendant une deuxième période de temps (t2) jusqu'à ce qu'une deuxième température (T2) de la pâte soit atteinte, supérieure à la première température (T1) ;
- activer et contrôler automatiquement lesdits moyens de chauffage/refroidissement par l'intermédiaire de ladite unité de contrôle pour refroidir progressivement la pâte pendant une troisième période de temps (t3) jusqu'à ce qu'une troisième température (T3) de la pâte soit atteinte, inférieure à la deuxième température (T2) et étant de 10 °C pour obtenir le levage de la pâte et pour préparer la pâte pour une cuisson ultérieure ;
- ladite unité de contrôle étant configurée pour effectuer en un seul cycle, de la fourniture de la pâte à la préparation pour la cuisson, les opérations de refroidissement de la pâte jusqu'à ce qu'une première température (T1) soit atteinte, de maintien de ladite première température (T1) de la pâte pendant une première période de temps (t1), de chauffage progressif de la pâte pendant une deuxième période de temps (t2) jusqu'à ce qu'une deuxième température (T2) soit atteinte et de refroidissement progressif de la pâte pendant une troisième période de temps (t3) jusqu'à ce qu'une troisième température (T3) soit atteinte ;
- ladite unité de contrôle de la cellule de levage (1) étant configurée pour :
- comparer une valeur d'humidité de la pâte détectée avec une valeur d'humidité préétablie ;
- chauffer ou générer de l'humidité en fonction de ladite comparaison pour contrôler l'humidité de la pâte ;
- contrôler la température et l'humidité de la pâte pendant toute la période pendant laquelle la pâte est présente à l'intérieur de la cellule de levage (1) de façon à pouvoir améliorer la qualité du produit cuit et sélectionner ses propriétés organoleptiques,
dans laquelle un ou plusieurs capteurs pour détecter la température sont disposés à l'intérieur de ladite cellule de levage (1) pour détecter la température de la pâte ; lesdits un ou plusieurs capteurs étant reliés à l'unité de contrôle pour envoyer les paramètres détectés à cette dernière.

12. Cellule de levage selon la revendication 11, **caractérisée en ce que** l'unité de contrôle est configurée pour établir a priori les durées de la première période de temps (t1), de la deuxième période de temps (t2), de la troisième période de temps (t3) en fonction de la durée totale du cycle préétabli par l'utilisateur ; ladite unité de contrôle étant configurée pour faire varier la première période de temps (t1) en fonction de la durée totale du cycle préétabli par l'utilisateur et maintenir essentiellement inchangées la deuxième période de temps (t2) et la troisième période de temps (t3).
